# EUROPEAN PATENT APPLICATION

(11) **EP 3 952 617 A1**
(43) Date of publication of application: **09.02.2022**
(21) Application number: 20776329.3
(22) Date of filing: 24.03.2020
(51) Int. Cl.: H05H 1/24, G21G 1/12, B01J 19/08

(54) **PLASMA REACTION METHOD AND PLASMA REACTION APPARATUS**

(30) Priority: 26.03.2019 JP 2019058416; 23.03.2020 JP 2020051098
(71) Applicant: Ishikawa, Yasuo, Kamakura-shi, Kanagawa, 248-0036 (JP)
(72) Inventor: Ishikawa, Yasuo, Kamakura-shi, Kanagawa, 248-0036 (JP)
(74) Representative: Viering, Jentschura & Partner mbB Patent- und Rechtsanwälte
(86) International application number: PCT/JP2020/013061
(87) International publication number: WO 2020/196535

(57) **Abstract**

In order to prevent the global warming by taking hydrogen out of gases such as nitrogen, carbon dioxide, etc., a reactor 70 made of stainless steel is heated, at a temperature above 500°C, at a bottom portion where alkaline metal such as Li, Na, Ka, etc. is accommodated to be melted so that fine particles fly out to a plasma space 74 formed above the alkaline metal and having a function to amplify energy by the heat-oscillation of metal, and the first electromagnetic waves are emitted from a reactor wall to generate the second electromagnetic waves having an amplified energy in the plasma space, and further the second electromagnetic waves separate protons of nitrogen gas, carbon dioxide gas, etc. to produce hydrogen.

## Description

### Technical Field

This invention relates to a method of and an apparatus for separating nucleons from atomic nuclei of gases such as nitrogen, carbon dioxide, etc.

### Background of the Technology

The inventor of this application has been developing a method of taking hydrogen out of water, in which a reaction agent is supplied into a sealed vessel as a reactor made of stainless steel, and the reactor is heated at a temperature of 500°C to 600°C. The reaction agent comprises sodium hydroxide or potassium hydroxide and is heated so as to disperse the fine particles of the reaction agent into a reaction cylinder so that the particles collide with the molecules of water to separate hydrogen from oxygen.

### Prior Art

### Patent Literature

Patent Literature 1: Japanese Patent No. 6034550
Patent Literature 2: Japanese Patent No. 6005331

### Summary of the Invention

### Subject to be Solved by the Invention

In the above patent publications 1 and 2, hydrogen can be separated from water, gaseous oxygen is not discharged together with hydrogen, but remained in a reactor as oxide. Further, hydrogen comes out more than the amount of hydrogen included in water supplied thereinto. However, the reasons for these phenomena are not disclosed.

And, sodium hydroxide (NaOH) or potassium hydroxide (KOH) is used as catalyst or reaction agent which includes the ingredient of oxygen. Therefore, at the step of preparation of the reactor, even if the reactor is heated after it is made a vacuum, a little oxide is remained in the reactor to decrease a reaction efficiency and the life span of reaction. In addition, the principles of reaction are not explained efficiently, and there is a problem when it is practically used. Means for Solving the Subject

The subject of this invention is solved by a method having the steps of : ejecting the first electromagnetic waves with a plurality of different frequencies by heating a reactor wall made of material having heat resistance and conductivity; supplying amplification material for amplifying the energy of the first electromagnetic waves into the reactor; vaporizing the amplification material under the cooperative influence of the first electromagnetic waves with the amplification material itself which is then changed into fine particles; ionizing the fine particles to form a plasma apace; radiating the first electromagnetic waves to the fine particles to emit the second electromagnetic waves having amplified energy; and separating nucleons of a gaseous element under the cooperative action of the second electromagnetic waves with gas fed into the reactor to be treated therein.

Further, the reactor is made of stainless steel or iron, and the amplification material comprises at least one of alkaline metals such as lithium, sodium or potassium or the fluoride of those elements.

As the gas to be treated, nitrogen, carbon dioxide, argon and stream (deuterium and tritium) are preferably supplied thereinto.

Furthermore, as the amplification material, sodium or potassium with stainless powder or zinc powder is preferable.

Further, a portion of the reactor for accommodating the amplification material is heated at a temperature of 400°C to 600°C, and, further, the plasma space is preferably maintained in a state of air-cooling to keep it at a temperature of 200°C to 300°C.

An apparatus for plasma reaction of this invention comprises: a reactor made of material having heat resistance, corrosion resistance and conductivity and emitting the first electromagnetic waves with a plurality of frequencies from a reactor wall to be heated; amplification material made of at least one kind of alkaline metals which are accommodated in the reactor to amplify the energy of the first electromagnetic waves by the interaction between the amplification material and the first electromagnetic waves to emit the second electromagnetic waves; and a heating device for heating the reactor to vaporize the amplification material and to emit the first electromagnetic waves from a reactor wall thereby to form a plasma space, nucleons being separated from the nuclei of the atoms in gas supplied into the reactor to be treated.

Further, the reactor is made of stainless steel or iron material, and the amplification material preferably comprises at least one kind of alkaline metals with stainless steel powder, iron powder or zinc powder.

Furthermore, the heating device preferably has an inner heating cylinder disposed in the reactor, and hydrogen produced in the reactor is fed into a burner in the inner heating cylinder to heat it.

Furthermore, the reactor has a air-cooled portion and a heated portion, and the plasma is formed corresponding to the air-cooled portion.

Furthermore, a carbon layer is attached to the inner wall of the reactor.

Furthermore, the heating device preferably has an inner heating cylinder, and a plurality of cylindrical cassettes including the amplification material therein are disposed between the inner heating cylinder and the main body of the reactor to form paths for the gas to be treated.

### Effect of the Invention

A sealed reaction cylinder (reactor) without the inflow of air (oxygen) is made of iron or stainless steel material (austenite crystal structure including nickel is preferable), and an energy amplification material is supplied into the inside of the reactor to amplify the energy of electromagnetic waves emitted from the wall of the reactor, and, further, the energy amplification material comprises alkaline metal or alkaline fluoride. When the reactor is heated at a temperature above 400°C, metal crystal lattices in the wall of the reactor oscillate, and electrons also oscillate to generate electromagnetic waves having wave lengths peculiar to the metal. Interaction between the electromagnetic waves and the amplification material partially occurs to generate a high temperature portion thereby to vaporize the amplification material, so that light fine particles are dispersed in the reactor. These fine particles have the same function as that of generating energized laser beams and interact with the electromagnetic waves emitted from the reactor wall to induce-emit the energized second electromagnetic waves.

When gases such as nitrogen, carbon dioxide, etc. are fed into the reactor to be close to the fine particles, the second electromagnetic waves enter the nuclei of the atoms of the gas to interact with gluons which are one kind of gauge elementary particles and are the source of nuclear force thereby to obstruct or recover instantly the exchange of color charge because both of the electromagnetic waves and gluons are wave motion.

In this manner, the nuclear force between a proton and a proton, between a proton and a neutron and between a neutron and a neutron is cut at a certain possibility or percentage, and especially in the case that the nuclear force between a proton and a proton is cut, the proton coming out of a nucleus with a repulsive force on the basis of an electromagnetic force to form a hydrogen gas atom by uniting with an electron.

Since the reactor is made a vacuum at its preparation step, there is no oxygen ingredient not to form an oxide layer in the reactor at all which has a fear to absorb the first electromagnetic waves emitted by a heat lattice oscillation on the reactor wall. On the basis of "law of conservation of energy" with respect to elementary particles, the theoretical energy level of the first electromagnetic waves is not limited for an extremely short time in spite of the level of a theoretical energy of a heat oscillation. That is, its energy level has a possibility to go up to a level more than the level on the basis of the heat oscillation. Further, there may be a certain possibility that the energy of the second electromagnetic waves is higher than a theoretical value produced by a reaction between the first electromagnetic waves and the amplification material, and the second electromagnetic waves cut the nuclear force instantly (e.g., time of 10⁻¹⁰ second) to separate nucleons from a nucleus. Accordingly, protons and neutrons are separated from carbon dioxide in which molecules move freely to make it harmless and to prevent the global warming. In addition, tritium water generated in an atomic reactor can be made harmless by removing neutrons from protons in a nucleus. Further, as hydrogen is produced from nitrogen, a hydrogen electric power generation is possible all over the world (especially on desserts), and burning of hydrogen can produce electric power and water to contribute to afforestation of desert.

### Brief Description of the Drawings

Figure 1 shows a schematic view of a hydrogen electric power system including a hydrogen generating apparatus (reactor) of this invention.
Figure 2 shows a partial perspective view of an amplification material casing disposed in the reactor.
Figure 3 shows a cross-sectional view along a line III-III.
Figure 4 shows a structural view of a reactor which is one of other embodiments of this invention.
Figure 5 shows a structural view of the reactor which is one of other embodiments of this invention.
Figure 6 shows a partial cross-sectional view which is one of other embodiments of this invention.
Figure 7 shows a cross-sectional view of the reactor shown in Fig. 6.
Figure 8 shows a perspective view of a cassette cylinder accommodating nuclear reaction material.
Figure 9 shows a cross-sectional view of the cassette cylinder shown in Fig. 8.
Figure 10 shows a longitudinal-sectional view of a reactor for explaining a principle of this invention.
Figure 11 shows a perspective view of a metal crystal lattice structure.
Figure 12 shows a partial cross-sectional view which is one of other embodiments of this invention.
Figure 13 shows an enlarged sectional view of the bottom portion of the reactor.
Figure 14 shows an operational view for explaining a plasma space of the reactor.
Figure 15 shows a view for explaining a relation between an electromagnetic force and a nuclear force both of which operate among nucleons.
Figure 16 shows a view for explaining separating operation of nitrogen in a reaction space.
Figure 17 shows a sectional view of a lateral type of reactor which is one of other embodiments.
Figure 18 shows an explanatory view of reactors disposed in parallel.
Figure 19 shows an explanatory view with respect to a largeness of energy of the second electromagnetic waves, which is one of other embodiments of this invention.

### Embodiment of the Invention

The embodiments of this invention will now be explained with reference to the drawings.

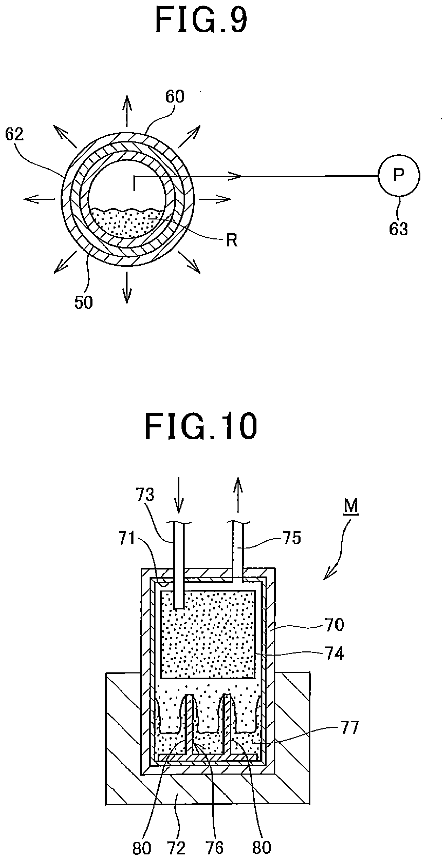

In Figure 10, a plasma reaction apparatus M of this invention has a cylindrical reactor 70 which is made of iron or stainless steel. In the stainless steel, SUS 304, 310 or 316 of austenite crystal structure is preferably used because it has a good heat resistance, an anticorrosion and a conductivity. Iron can be used in a state wherein oxygen can be completely prevented from flowing into the reactor. A carbon layer 71 is formed on the inner wall of the reactor 70 for the prevention of oxidation and for the emission of electromagnetic waves (cavity radiation).

The lower half circumferential portion is surrounded by a platelike heating device (heater) 72 which can heat the reactor 70 at a temperature of 400°C to 700°C. A supplying pipe 73 is provided on the upper surface of the reactor 70 to supply gas thereinto, and extends into a plasma space 74 formed at the upper half portion of the reactor 70 so as to open to the space 74. And a discharging pipe 75 is also provided on the upper surface of the reactor 70 to discharge the gas produced in the plasma space 74. An emitting supplementary body 76 is disposed at the bottom portion of the reactor 70 and has a plurality of emitting plates 80, 80 ... 80 to increase electromagnetic emitting area, and, further, amplification material for amplifying the energy of the electromagnetic waves is accommodated together with the body 76. The emitting supplementary body 76 is made of the same material as the reactor 70. Instead, powder of the same material, e.g., iron or stainless steel powder of approximately 70µm can be used.

As the amplification material 77, at least one of alkaline metals (lithium 7), sodium (Na) and potassium (K) can be used. Instead, fluoride (LiF, NaF, KF) of alkaline metals can be used. In the case that stainless, iron or zinc powder is added to those alkaline metals, a reaction efficiency increases.

Each electromagnetic amplification material has one electron on the outermost shell and is chemically active. If it is heated, electrons on inner shells easily jump up to one of outer shells. Further, these metal elements and those fluorides have relatively low melting points (Li:180°C, Na:98°C, K:64°C, Lif:460°C) so that they are easily changed into liquid by heating them. For example, if the amplification materials are heated at a temperature above 400°C, they go up to a high temperature by their energy amplification function and by molecular heat oscillation to produce fine particles which are dispersed to fill the plasma space 74 therewith.

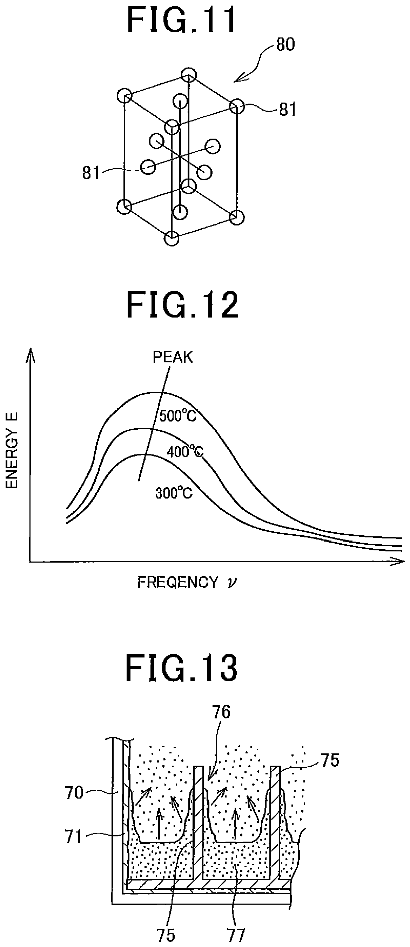

On the contrary, the metal material in the wall of the reactor has, as shown in Fig. 11, a crystal lattice 80 which comprises each element 81.

Such a lattice structure emits electromagnetic waves having characteristic frequencies with respect to the lattice. This electromagnetic waves correspond to a cavity radiation in the reactor, and as shown in Fig. 12, are emitted so as to have different strengths in correspondence to a temperature. That is, the strength (number of photons) of the electromagnetic waves become larger as the temperature of the reactor goes up, and their peaks move in a direction where their frequencies become large. The frequencies of the electromagnetic waves emitted at a certain temperature are numberless from a small number of frequency to a large number thereof. The energy hv (h: plank constant; v: frequency) of electromagnetic waves is not successive and is quantumized to change in a jumping manner.

In the case that sodium (Na) is used as amplification material, sodium is melted and liquidized at a temperature below 100°C, and, as shown in Fig. 13, goes slightly up along the surface of an emittance plate 75 by a surface tension. The crystal lattice of the amplification material oscillates fiercely and partially by being heated at a temperature of 300°C to 400°C through a cooperative reaction between the electromagnetic waves and the sodium Na.

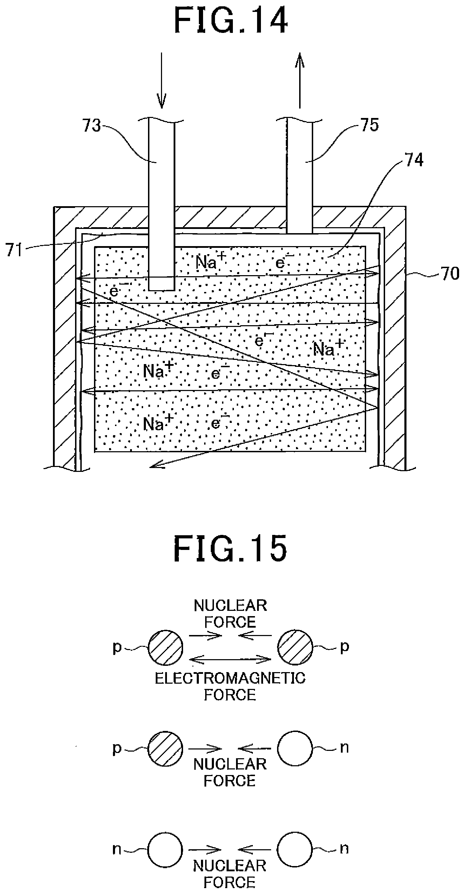

As a result, it is vaporized to produce fine particles which are dispersed in the plasma space 74. In these fine particles, as shown in Fig. 14, one electron e⁻ on the outermost shell is sprung out through an ionization reaction to form a plasma atmosphere in which on Na⁺ ion and the e⁻ are mixed with each other. This reaction happens even in the case of Li or K. At the same time, metal sodium ions in the plasma atmosphere is excited to emit the second electromagnetic waves which are, as shown in Fig. 14, reflected on a carbon layer as a reactor wall so as to be amplified by a cooperative reaction with the amplification material through the same function as a laser beam amplification function for increasing the number of the photons of laser beam. The amplified second electromagnetic waves react with gases (N₂gas, CO₂gas, helium gas, argon gas, tritium steam, normal steam) supplied into the reactor to separate nucleons from each nucleus. The upper half portion of the reactor 70 is opened to the atmosphere so as to be air-cooled. An air-cooling changes the energy amplification function of the plasma space. The plasma space 74 must be maintained, e.g., at a temperature of 200°C to 400°C. In order to produce a lot of fine particles of the amplification material at the bottom portion of the reactor, the bottom portion is preferably maintained at a temperature above 400°C so that there is a difference in temperature between the fine particle emitting portion and the plasma space. That is, the lower half portion of the reactor 70 forms a heating portion and its upper half portion forms an air-cooling portion so that the air-cooling portion corresponds to the plasma space 74.

As mentioned above, in order to separate protons or neutrons from a nucleon, energy above the nuclear force (corresponding to binding energy) of a nucleus must be given to each nucleon. With respect to the generations of the first and second electromagnetic waves, as shown in Fig. 12, some electromagnetic waves of high frequencies (oscillations) are emitted by the cavity radiation. Furthermore, according to the "uncertainly principle", the product of energy and time (period) makes a value above the Plank constant (ΔEΔt≧h). For example, in the instant period of 1/one billion second (10⁻⁶ second), "the principle of energy reservation" is not adapted, so that an extremely large energy occurs at a certain probability. To be concrete, the nuclear force among nucleons of the nucleus of a nitrogen atom is 6 to 7 MeV which correspond to a wave motion energy of γ ray with a frequency above 10²⁰, and the second electromagnetic waves with such a wave notion energy react on the wave motion of gluons as elementary particles to cut instantly the nuclear force thereby to separate protons and neutrons from a nucleus. In the nucleus, protons and neutrons move on each orbit while they are oscillating, and the distances between them are changing. Especially, when a heating energy is given to them, they oscillate furiously to obtain kinetic energies, respectively (1/2mv²). When the nuclear force between two portions is cut, the protons are, as shown in Fig. 15, sprung away from each other by an electromagnetic repulsive force therebetween. At this time, in the case that each proton is united with an electron, an atom of hydrogen with a constant volume is formed. On the contrary, when nuclear forces (between a proton and a neutron, between tow neutrons) are cut to separate each neutron from a nucleus, each neutron has only a kinetic energy without an electromagnetic force. Therefore, its separating force is small in comparison with that of two protons, so that each neutron floats in the reactor without moving fast, and may be sometimes captured in the reactor wall. Each neutron changes to a proton after a predetermined time through a β-decay. Namely in the plasma space, an amplified energy is generated at a certain probability without abiding by the energy reservation principle, so that the temperature of the plasma space is remarkably raised. This results in that the nucleons are separated from each other to generate instantly an endothermic reaction. Such an endothermic reaction has been certified at several times by a thermometer. The range of temperature above 250°C drops instantly even during heating the reactor. With respect to exothermic reaction, it was observed that some stainless steel powders of 1mmϕ(diameter) as amplification material are completely vaporized to disappear in the reactor. This mean the raise of temperature above 3000°C, and, further, an amorphous crystal structure was found on the reactor wall. Therefore, the temperature of the reactor wall drops steeply from an extremely high temperature to an extremely low temperature.

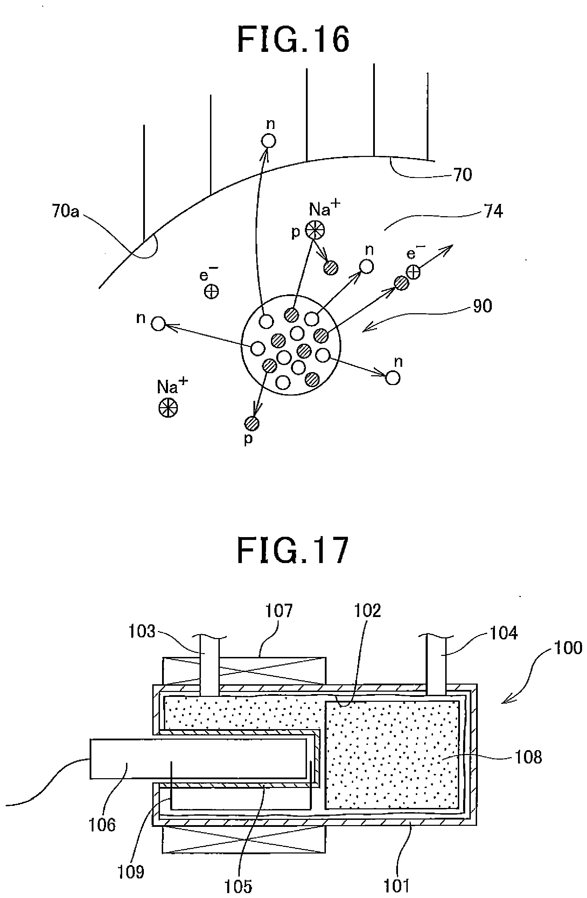

With reference to Fig. 16, the action of a nitrogen nucleus 90 supplied into the reactor 70 will now be explained. The nucleus 90 has seven protons P and seven neutrons n, and the amplified second electromagnetic waves generate a large energy (7 to 8 Mev) which makes seven protons P spring out of the nucleus 70 into the plasma space 74. At this time, each proton springs out at a high speed by a repulsive force to have a large kinetic energy. However, in the case that the proton is reunited with an electron to form a hydrogen atom having a predetermined volume, the flying speed of its kinetic energy becomes small. Even if the proton collides with the reactor wall 70a, it cannot be caught in the reactor wall because of a repulsive force from atoms of stainless steel in the reactor wall. In addition, when a nuclear force including seven neutrons is cut, the velocity of the kinetic energy (1/2mv²) of each neutron is smaller than that of each proton because of no repulsive force among them in an electromagnetic field. when each neutron collides with each particle (Na⁺, e⁻, etc.) dispersed in the space, it loses the velocity of the kinetic energy. In this state, it is changed into a proton by a β-decay or it flies in the reactor without moving out of the reactor. In this manner, instant exothermic reaction and endothermic reaction are repeated by the generation of a high energy and the separation of protons from a nucleus.

In this invention, since the exothermic reaction balances with the endothermic reaction, the reactor can be operated safely. That is, if the separation of protons only occurs, a remarkable endothermic reaction only occurs so that the temperature of the reactor drops at the absolute temperature 0° to stop the reaction. If the exothermic reaction only occurs, the reactor wall is instantly melted to stop the reaction. In this invention, the probability of the endothermic reaction balances almost with that of exothermic reaction, and, however, it is preferable that the possibility of endothermic reaction is slightly larger than that of the exothermic reaction in view of safety of the reactor. In this manner, the two reactions continue safely, and there is little such a danger that neutrons jump out of the reactor. At the time of experiments, a device for measuring neutrons was always disposed near the reactor 70, and, however, there was not fact that the device detected distinctly the neutrons.

The vertical type of reactor is operated as mentioned above, and a lateral type of reactor can be also operated in the same manner as shown in Fig. 17. A reactor 100 has a lateral cylindrical body 101 made of stainless steel or iron, and a carbon layer 102 is formed on the inner wall of the body 101. At the left end portion of the body 101 is provided a gas supply pipe 103, and at the right end portion thereof is provided a hydrogen discharging pipe 104. A heating pipe 105 made of stainless steel (SUS 304) is extended in the central axis direction of the body 101 to the central portion of the body.

A heater 106 as an inner device is accommodated in the heating pipe 105 to heat the inside of the body 101. In addition, the outer circumferential wall positioned at the left half portion of the body 101 is covered with a plate-like heater 107 as an outer heating device to form a heating portion. The right half portion of the body 101 is exposed to the atmosphere to be coaled to form a cooling portion which corresponds to a plasma space 108. A case 109 for accommodating amplification material is mounted on the lower surface of the left half portion of the body 101, and metal lithium, sodium, etc., as the amplification material re accommodated in the case 109. In the case that the reactor 100 is heated by both heaters 106 and 107, the fine particles of the amplification material are sufficiently dispersed to fill a plasma space therewith thereby to ensure a phase transition in the cooled reaction space.

The inventor of this invention has been making experiments for eleven years, and the kind of experiments and opinions on the basis of each experiment will now be explained. 1. An experiment with respect to the kind of the material of the reactor

NaOH was conventionally used as the amplification material. The reactor can be made of ceramic, copper, nickel, iron or SUS304, 310, 306, SUS materials were preferable, and ceramic, copper or nickel material were not preferable to produce hardly hydrogen from water supplied into the reactor. In SUS materials, SUS304 or 306 having a austenite crystal structure was preferable, and SUS material of ferrite crystal structure was inferior. Further, the reactor made of iron had a good reaction, and, however, the reaction did not continue for a long time. At first, NaOH was used as the amplification material, and alkaline metal itself without the ingredient of oxygen is used in view of the prevention of oxidation.

### 2. An experiment with respect to the kind of the amplification material

At first, stainless steel piece (SUS304) with sodium hydroxide (NaOH) or potassium hydroxide (KOH) were used to take hydrogen out of supplied water, and instead of these materials, sodium titanium oxide (KTiO₂) or potassium titanium oxide (NaTiO₂) was used to take hydrogen from water. On the contrary, a reactor of SUS304 without the amplification material could produce a slight amount of hydrogen from water. However, the reactor had to be heated at a temperature above 650°C in order to produce a sufficient amount of hydrogen. In addition, it was clearly confirmed that a reactor of SUS304 accommodating only NaTiO₃ or KTiO₃ therein was simply heated at a temperature above 500°C, so that hydrogen continued to be produced for long hours (almost one week). The reactor was heated, before the experiment, at 600°C for several hours to discharge outside hydrogen included in a reactor wall. In the case of sodium titanium oxide, a plasma atmosphere (Na⁺, Ti³⁺, O²⁻, electron e⁻) was formed over the surface of the amplification material by its heated oscillation to separate protons from at least one of these ions. There is a high possibility that hydrogen is produced from oxygen having the smallest bounding energy among these three ions.

### 3. An experiment with respect to the condition of the plasma space in the reactor

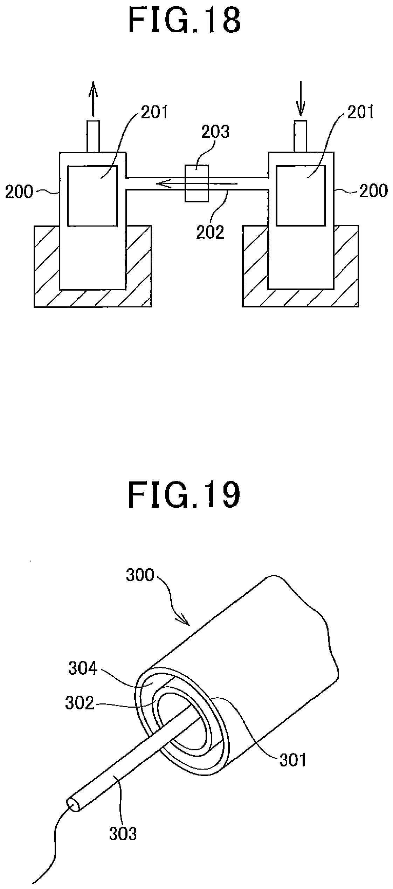

When Na was used as the amplification material and a kind of gas such as nitrogen or argon was fed into the reactor, a flame reaction of Na could be conspicuously observed. The flame reaction means that a lots of Na fine particles were flying in the plasma space of the reactor. When the reactor was disposed in an insulated state, it could be confirmed that there was a potential difference between an outer side surface, corresponding to the plasma space, of the reactor and the ground, and the reactor space was filled with electrons. Further, two reactors were, as shown in Fig. 18, disposed in parallel, and the plasma spaces 201, 201 were connected with each other through a pipe 202 which was provided with an insulator piece 203 at its center portion though which the plasma spaces were communicated with each other. In this case, it was confirmed that both reactors were electrically communicated with each other to generate a potential difference. Namely it is understood that the plasma space is formed with an ionized gas, and electrons fly in the space. In general, it is known that sodium has a function for amplification of electromagnetic waves. Accordingly, the plasma space has an amplification function for the electromagnetic waves.

### 4. An experiment with respect to the optimum position of the plasma space

In the case that, in a vertical type of reactor as shown in Fig. 10, the reactor accommodates Na and stainless steel powder (SUS304; ϕ70µ) as the amplification material, and the bottom surface and the half lower side surface of the reactor were covered with a platelike heater, the temperature of the gas discharging pipe 75 projecting upward from its upper surface dropped suddenly at its root portion which was air-cooled. Thus, it was observed that the temperature of an air-cooled portion changed largely. That is, a plasma reaction occurred at a predetermined range of temperature. In synthetic view of various experiments, it occurred almost at the range of 200°C to 300°C, and it is understood that a plasma phase transition occurs at such a range of the temperature. At this range, sodium hydride (NaH) is formed on the inner surface of the reactor. Further, when the gas supplying pipe was extended to the bottom portion of the reactor to supply water of 2cc therein in one operation (normally 0.5cc) to cool the bottom portion of the reactor, a gas separation reaction occurred actively to generate a lot of gases of mass numbers of 15 to 24 before and after mass number 18 so that hydrogen was produced by approximately 5 times as much as normal amount. This reaction continued for more than 40 days and stopped after that. It is supposed that gases of mass numbers 15 to 24 belong to CH gases, and a huge amount of hydrogen came out of oxygen in water in addition to hydrogen in water. This reaction generated a lot of hydrogen in the following manner. First, the reactor wall was heated at a high temperature to emit the first electromagnetic waves, so that a lot of fine particles are generated from the amplification material attached on the reactor wall. In addition, a lot of steam cooling the plasma atmosphere to generate the phase transition (the change of condition of plasma), and, further, to energize the second electromagnetic waves, and furthermore to generate a lot of proton separations.

### 5. An experiment with respect to an action of nucleons at a time of reaction

In the case that sodium hydroxide and some stainless steel pieces were accommodated, as the amplification material, in a reactor made of stainless steel, and heavy water (D₂O) was supplied thereinto while heating it by an inner heater, the heavy water was almost changed into H₂ gas so that D₂ gas disappeared. Analysis of a reactor wall piece showed that some isotopes had more neutrons than normal isotopes. Especially, the phenomenon was remarkable in the case of Fe isotopes. It seems that the neutrons were absorbed in each metal of the reactor.

In addition, in the case that tritium water (T₂O) is supplied instead of D₂O, tritium above 70 percent disappeared. This result proved to be true by measuring the amount of β-rays. It seems that neutrons were separated from nuclei also in this case.

### 6. An experiment with respect to the energy of the generated electromagnetic waves

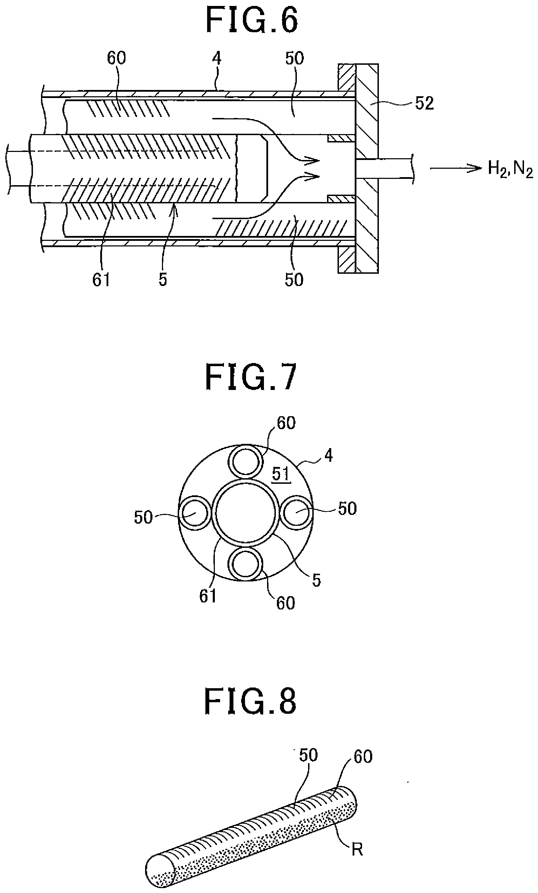

As shown in Fig. 19, a reactor 300 has an inner pipe 302 and an outer pipe 302 with a large diameter, and sodium hydroxide and stainless pieces were accommodated in the inner pipe 302, and, further, an electric heater 303 was disposed in the inner pipe 302 to heat its inside at a temperature of approximately 550°C. Argon gas was fed into a space 304 between the inner and outer pipes for insulation. Normal water was supplied in the inner pipe. In this experiment, the space 304 was maintained at a constant temperature, and, however, a certain gas in the space 304 was expanded for three days to increase its pressure to over 0.3Mpa. According to a gas analysis, the argon gas was almost changed into hydrogen gas. It seems that the second electromagnetic waves in the inner pipe 302 passed through the pipe wall to change the argon gas into hydrogen or the first electromagnetic waves emitted from the outer surface of the inner pipe 302 changed the argon gas into hydrogen. According to an analysis of the ingredient of the inner pipe wall, a lot of fluorine was detected. There might be some nuclear transformation under the influence of the second electromagnetic waves. Accordingly, it is supposed that the second electromagnetic waves had instantly a frequency corresponding to X-ray or γ-ray which has a strong penetration. On the basis of these teachings, a cassette type of reactor was invented as shown in Figs. 6 to 8 which are mentioned after.

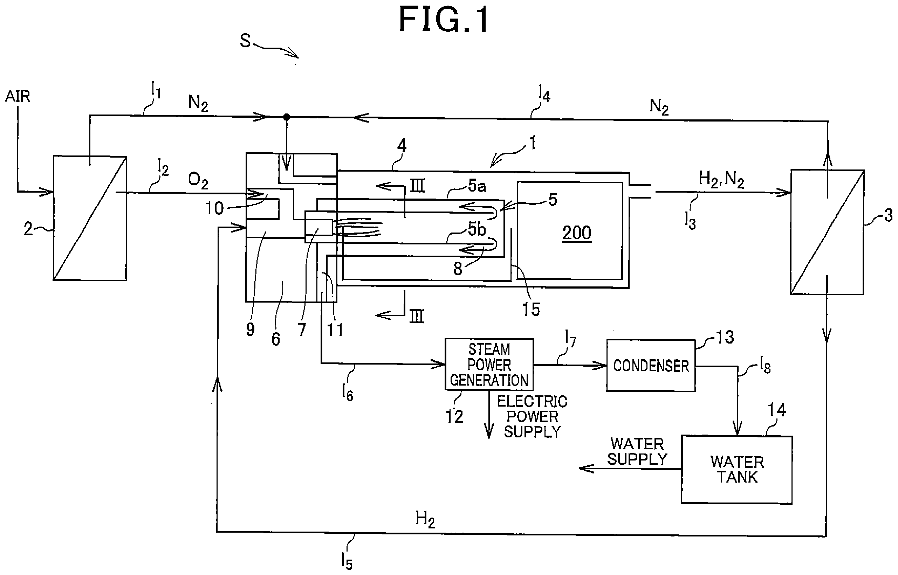

Next, a hydrogen power generation system including a plasma reaction apparatus of this invention will now be explained. A hydrogen power generation system has, as shown in Fig. 1, a reactor 1 which is provided with a separation device 2 for separating nitrogen from oxygen in air. The separation device 2 has a known separation film. Nitrogen N₂ and oxygen O₂ separated from air are supplied to the reactor 1 through a path I₁ and a path I₂, respectively. The reactor 1 transforms a part (above 50%) of nitrogen into hydrogen (H₂), and the remaining nitrogen (N₂) and hydrogen are fed into a separation 3 for separating hydrogen from the remaining nitrogen. The separated nitrogen (N₂) is fed into the reactor 1 through a path I₄ to be transformed into hydrogen again, and the separated hydrogen (H₂) is fed through a path I₅ into the reactor 1 to be used as a combustion gas.

The reactor 1 has a main body 4 made of stainless steel (SUS304, 310, 316: austenite is preferable) in which the left end of an inner heating cylinder 5 for heating the inside of the body 4, and the left end of the body 4 are supported by a fixing flame 6. The heating cylinder 5 has a double-structure which comprises an outer cylinder 5a and an inner cylinder 5b. A burner 7 is set on the side of the fixing flame 6 of the inner cylinder 5b which is open on the opposite side thereof (forward end), and the combustion gas from the burner 7 is turned back along the forward end surface (right end) of the closed outer cylinder 5a to be fed into a path 11 through a discharging space 8 formed between inner and outer cylinders 5a and 5b. Hydrogen gas is supplied in the burner 7 through a path 9 of the fixing flame 6, and oxygen gas is supplied therein through a path 10, and both gases are burned by the burner 7 to produce steam of a high temperature which passes through the inner cylinder 5b and is returned back at its forward end to come to a path I₆ through the path 11. The steam from the path I₆ rotates a steam turbine of a known power generation device 12 to generate electric power. After this, the steam is changed into water by a condenser 13 through a path I₇ to be stored in a water tank through a path I₈.

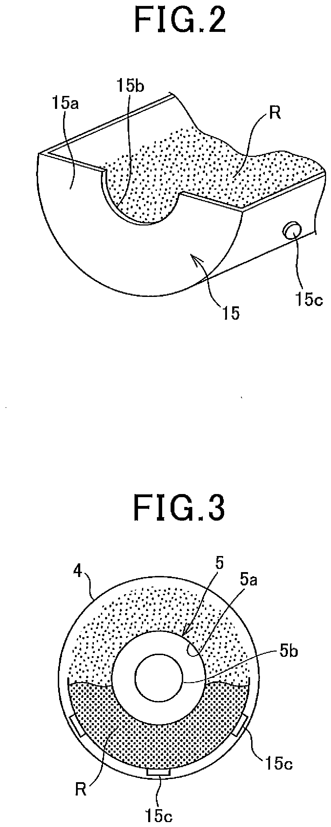

A case 15 is accommodated at the lower portion of the body 4 of the reactor 1 as shown in Figs. 2 and 3 to hold amplification material R therein, and is in the shape of a gutter which is closed by end plates 15a, 15a at its both ends. Each end plate 15a has a semicircular hollow 15b, at the upper end of the end plate 15a, to be engaged with the heating cylinder 5. A plurality of slide pieces 15c, 15c ... 15c are formed on the outer wall surface of the case 15 so as to ensure that the case 15 can slide on the inner wall surface of the body 4. The quality of the material of the case 15 is the same as that of the reactor 1.

The heating cylinder 5 is made of heat resistance ceramic so that the outer lower surface of the outer cylinder 5a contacts directly with the amplification material R to heat it.

The amplification material R is changed into fine particles to form a plasma atmosphere which can produce H₂ gas from, e.g., carbon dioxide (CO₂), argon (Ar), oxygen (O₂), helium (He), etc., in the same manner.

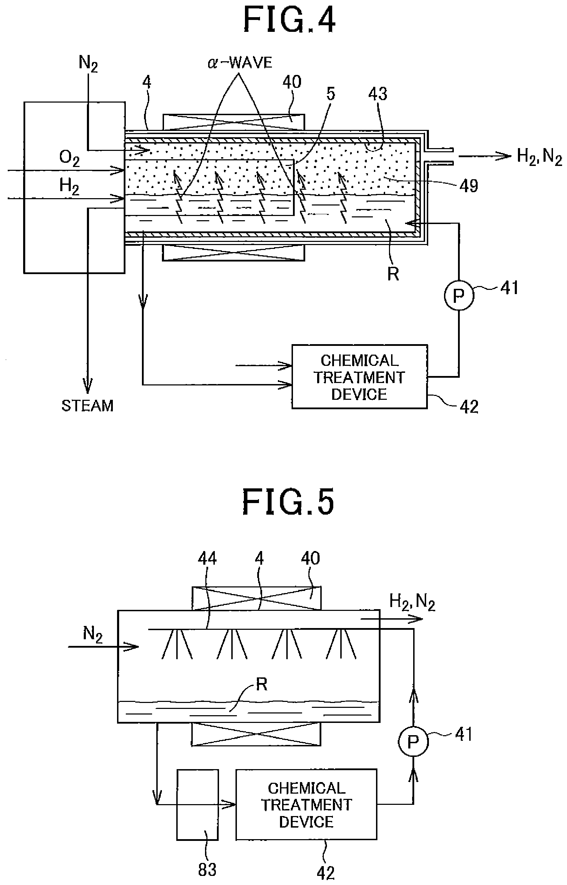

Fig. 4 shows another embodiment of the reactor in which a supplementary electric heater 40 is mounted on the outer circumferential surface of a cylindrical main body 4 to supplement the heating of the heating cylinder 5 so that nitrogen gas fed into the main body 4 is heated from both sides of a main body wall and a heating cylinder wall to increase the number of fine particles and the energy of the first electromagnetic waves. In this case, lithium fluoride of 70% and be lithium fluoride of 30% are used as the amplification material forming a kind of molten salt which is circulated by a pump 41 through the main body, and chemical treatment device 42 disposed outside of the main body 4, and the amplification material is newly supplied into the device 42 in response to the consumption of that. In the case that the molten salt includes nitride and carbide as impurities, the chemical treatment device 42 eliminates them from the molten salt thereby to be able to operate the reactor continuously for a long time. In addition, when radium or polonium both emitting α-ray is added, as additives, to the molten salt, the decay of nitrogen happens remarkably to increase the production of hydrogen. Further, a carbon layer 43 is formed on the inner surface of the main body 4 to prevent the inner surface of the stainless wall of the main body 4 from corroding, and a plasma space 49 is formed at the right half portion of the main body 4.

Next, another embodiment is shown in Fig. 5. That is, the inner-heating cylinder 5 is removed from the main body 4 and the amplification material R is heated by a heating device 83 disposed outside.

Further, the amplification material R is ejected by an ejecting pipe 44 to increase a contact efficiency with nitrogen gas. In addition, the center portion of the main body 4 is heated by a hater 40.

Next, an embodiment in which the amplification material is easily changeable by designing it in the form of cassette will be explained.

In Figs. 6 to 9, on the basis of the teachings of the experiment in Fig. 19, a plurality of cylindrical slender cassette cylinders 50, 50... 50 are detachably disposed between the outer circumferential surface and the inner wall of the main body 4 in a state where a gas passage 51 is formed between adjacent cassette cylinders 50, each of which is exchangeable by forming an end plate 52 of the main body 4 in a detachable manner.

Each cassette cylinder 50 is made of stainless steel (SUS310, SUS316), and the amplification material R is hermetically accommodated therein.

As the amplification material, powder of SUS, Fe or Zn is preferably added to Na, K or Li of alkaline metal. Instead of each alkaline metal, NaH (sodium hydride) can be used. A carbon layer 62 is formed on the inner wall of the cassette cylinder 50, while the powder of radium or polonium emitting α-waves is applied to the outer circumferential surface thereof with a binder or the powder is thermally sprayed thereby to form a α-wave layer 60. And a similar α-wave layer 61 is formed also on the outer circumferential surface of the heating cylinder 5.

A vacuum is formed in the cassette cylinder 50 by a vacuum pump 63 (Fig. 9) to prevent an oxidation reaction therein. When the cassette cylinder 50 is heated at a temperature above 500°C, it emits the first electromagnetic waves which are amplified to generate the second electromagnetic waves which include partially waves of high frequencies so as to pass through a stainless steel wall. Further, these α-wave layers 60, 61 emit α-waves into the main body 4. The second electromagnetic waves spring out electrons in a nitrogen atom to ionize the atom and to cut the nuclear force of a nucleus. The α-waves increase the above function.

### Utilization Possibility in the Field of Industry

According to this invention, an electric power generation can be done from air without discharging carbon dioxide in addition to the production of water. Accordingly, the electric power generation can be done all over the world, and this invention is the most optimum means for afforestation of dessert due to the production of water. Further, conventional fuels can be used because carbon dioxide discharged on the earth can be changed into hydrogen.

### Explanation of Numerals

1, 7...reactor
4...main body
5...hating cylinder
43...carbon layer
50...cassette cylinder
60, 61...α-wave layer
71...carbon layer
72...heater
74...plasma space
76...emission supplementary body
77...electromagnetic amplification material

## Claims

1. A method of plasma reaction, comprising the steps of:
ejecting first electromagnetic waves with a plurality of different frequencies by heating a reactor wall made of material having heat resistance and conductivity;
supplying an amplification material for amplifying an energy of first electromagnetic waves into the reactor;
vaporizing the amplification material under a cooperative influence of the first electromagnetic waves together with the amplification material to change it into fine particles;
ionizing the fine particles to form a plasma space; radiating the first electromagnetic waves to the fine particles to emit second electromagnetic waves having an amplified energy; and
separating nucleons from nuclei of gaseous elements under a cooperative action of the second electromagnetic waves with gas fed into the reactor to be treated therein.

2. A method of plasma reaction according to claim 1, wherein the reactor is made of stainless steel or iron, the amplification material comprises at least one of alkaline metals such as lithium, sodium or potassium or one of fluorides of these alkaline metals, and nitrogen, carbon dioxide, argon or steam (deuterium, tritium) is supplied into the reactor to be treated.

3. A method of plasma reactor according to claim 2, wherein the amplification material comprises a compound of sodium or potassium and stainless steel powder or zinc powder.

4. A method of plasma reaction according to one of claims 1 to 3, wherein a portion of the reactor for accommodating the amplification material is heated at a temperature of 400°C to 600°C and the plasma space is preferably in a state of air-cooling to keep it at a temperature of 200°C to 300°C.

5. An apparatus for plasma reaction, comprising:
a reactor made of material having heat resistance, corrosion resistance and conductivity so as to emit first electromagnetic waves having a plurality of frequencies from a reactor wall which is heated;
amplification material including at least one kind of alkaline metals which are accommodated in the reactor to interact with the first electromagnetic waves thereby to emit second electromagnetic waves generated by an amplification of the first electromagnetic waves; and
a heating device for heating the reactor to vaporize the amplification material and to emit the first electromagnetic waves from the reactor wall thereby to form a plasma space,
nucleons being separated from atomic nuclei of gas supplied into the reactor to be treated.

6. An apparatus for plasma reaction according to claim 5, wherein the reactor is made of stainless steel or iron material, and the amplification material comprises a compound having at least one kind of alkaline metals and stainless steel powder, iron powder or zinc powder.

7. An apparatus for plasma reaction according to claim 5, wherein the heating device has an inner heating cylinder disposed in the reactor, and hydrogen gas produced in the reactor is fed into a burner in an inner heating cylinder to heat the cylinder.

8. An apparatus for plasma reaction according to claim 5, wherein the reactor has a heating portion and an air-cooled portion, and the plasma space is formed corresponding to the air-cooled portion.

9. An apparatus for plasma reaction according to claim 5, wherein a carbon layer is formed on an inner wall of the reactor.

10. An apparatus for plasma reaction according to claim 5, wherein the heating device has an inner heating cylinder and a plurality of cylindrical cassettes including the amplification material therein are disposed between the inner heating cylinder and a main body of the reactor to form paths for gas to be treated.
